# EUROPÄISCHE PATENTSCHRIFT

(11) **EP 1 905 653 B1**
(45) Veröffentlichungstag und Bekanntmachung des Hinweises auf die Patenterteilung: **03.12.2008**
(21) Anmeldenummer: 06020254.6
(22) Anmeldetag: 27.09.2006
(51) Int. Cl.: B60R 13/08, F02B 77/11, F02F 7/00

(54) **Hitzeschild**
Thermal shield
Bouclier thermique

(43) Veröffentlichungstag der Anmeldung: 02.04.2008
(73) Patentinhaber: REINZ-Dichtungs-GmbH, 89233 Neu-Ulm (DE)
(72) Erfinder: Schweiggart, Franz, 89284 Pfaffenhofen (DE)
(74) Vertreter: Tomerius, Isabel

(56) Entgegenhaltungen:
- EP-A- 1 151 909
- DE-A1- 10 349 743
- DE-C1- 3 643 055
- DE-U1-8202004 015 69
- JP-A- 7 243 333

## Beschreibung

Die Erfindung betrifft einen Hitzeschild zum Abschirmen eines Gegenstandes gegen Hitze und/oder Schall mit einer dem Gegenstand zugewandten Innenoberfläche und einer von dem Gegenstand abgewandten Außenoberfläche sowie mindestens einer Ausnehmung, die durch den Hitzeschild mit Innen- und Außenoberfläche hindurch geht. Ein Beispiel eines solches Hitzeschildes ist im Dokument EP 1 151 909 A2 erwähnt. Derartige Hitzeschilde werden beispielsweise in Motorräumen von Kraftfahrzeugen eingesetzt, insbesondere im Bereich der Abgasanlage, um benachbarte temperaturempfindliche Bauteile und Aggregate gegenüber unzulässiger Erhitzung zu schützen. Oft dienen die Hitzeschilde dabei gleichzeitig als Schallschutz. Konkret können solche Hitzeschilde beispielsweise zum Abschirmen eines Katalysators oder Vorkatalysators, eines Partikelfilters oder sonstiger Komponenten im Bereich des Abgasstrangs oder eines Turboladers eingesetzt werden. Im Hinblick auf einen kontinuierlichen Betrieb ist es für diese Komponenten oft nicht nur wichtig, vor einer zu starken Temperaturbelastung geschützt zu werden, sondern die Betriebstemperatur sollte möglichst während der gesamten Betriebsdauer keinen zu starken Schwankungen unterliegen.

Eine möglichst konstante Betriebstemperatur ist beispielsweise für die zur Abgasreinigung eingesetzten Komponenten von Vorteil, da auf diese Weise eine gleichmäßigere Abgasreinigungswirkung erzielt werden kann. Gleichzeitig lässt sich auch die Lebensdauer der Komponenten, benachbarter Gehäuseteile und gasführender Komponenten verlängern. Von besonderer Bedeutung sind schnelles Aufheizen und das Konstanthalten der Betriebstemperatur im Hinblick auf das Einhalten der zukünftigen EU-Abgasnorm Euro 5. Hier werden neben den Abgasgrenzwerten in der Normalbetriebsphase eines Motors auch Abgasgrenzwerte für die Kaltstartphase definiert. Bekanntlich unterscheidet sich der Wirkungsgrad der Abgasreinigungskatalysatoren für die im Abgas enthaltenen Schadstoffe in Abhängigkeit von der Temperatur. So ist beispielsweise der Ausstoß von Kohlenwasserstoffen und Kohlenmonoxid zu Beginn der Kaltstartphase besonders hoch. Dies ist hauptsächlich darauf zurückzuführen, dass der Katalysator seine Betriebstemperatur noch nicht erreicht hat. Zur Reduktion dieser Schadstoffe ist es daher erforderlich, die Betriebstemperatur des Katalysators möglichst rasch zu erhöhen. Andererseits darf die Betriebstemperatur jedoch nicht zu sehr ansteigen, da dies einerseits zur Vermehrung anderer Schadstoffe wie beispielsweise Stickoxiden im Abgas führt und andererseits eine zu hohe Temperatur den Katalysator selbst und benachbarte Komponenten schädigen könnte.

In anderen Fällen kann es beispielsweise wünschenswert sein, während einer bestimmten Betriebsphase eine gegenüber anderen Betriebsphasen höhere oder niedrigere Temperatur einstellen zu können. So kann zum Beispiel bei einem Partikelfilter eine Betriebsphase höherer Temperatur durchlaufen werden, in der im Partikelfilter abgelagerte Partikel oxidativ entfernt werden. Bisher war es üblich, diese erhöhte Temperatur durch motorische Maßnahmen und oder durch zusätzliches Einspritzen von Brennstoffen zu erreichen. Nach vollendeter Partikelentfernung wurden die Maßnahmen wieder auf Normalbetrieb zurückgefahren. Dieses Vorgehen ist jedoch sehr aufwändig, und benötigt zusätzliche Energie.

Angesichts der vorstehend beschriebenen Probleme ist es die Aufgabe der vorliegenden Erfindung, einen Hitzschild anzugeben, der geeignet ist, die Betriebstemperatur eines von ihm abgeschirmten Gegenstandes auf einen vorgegebenen Bereich einzustellen. Der Hitzeschild sollte es einerseits erlauben, die Temperatur möglichst konstant zu halten und gleichzeitig ein möglichst schnelles Erreichen der Betriebstemperatur zu gewährleisten. Andererseits sollte der Hitzeschild auch einen wahlweisen Betrieb bei verschiedenen vorgegebenen Temperaturen ermöglichen.

Die Lösung dieser Aufgabe gelingt mit dem Hitzeschild gemäß Anspruch 1. Bevorzugte Ausführungsformen sind in den Unteransprüchen beschrieben.

Der erfindungsgemäße Hitzeschild zum Abschirmen eines Gegenstandes gegen Hitze und/oder Schall besitzt eine dem Gegenstand zugewandte Innenoberfläche und eine vom Gegenstand abgewandte Außenoberfläche. In dem Hitzeschild ist eine Ausnehmung vorhanden, die durch Innen- und Außenoberfläche hindurch geht. Erfindungsgemäß ist diese Ausnehmung zumindest bereichsweise von einem Verschluss verschließbar, der sich in Abhängigkeit von der Temperatur selbsttätig öffnet und schließt. Durch das Öffnen des Verschlusses wird die im Hitzeschild ausgebildete Ausnehmung freigegeben, so dass durch den so entstandenen Durchlass eine bessere Temperaturregulierung ermöglicht wird. Zum Beispiel kann zwischen dem abzuschirmenden Gegenstand, der benachbart zur Innenoberfläche des Hitzeschilds angeordnet ist, und dem Hitzeschild angestaute heiße Luft durch die freigegebene Ausnehmung entweichen und so die Temperatur im Bereich um den abzuschirmenden Gegenstand abgesenkt werden. Umgekehrt ist es beispielsweise ebenso gut möglich, durch die freigegebene Ausnehmung kältere Luft in Richtung auf den abzuschirmenden Gegenstand einzulassen und so die Temperatur in dessen Umgebung zu reduzieren. Ebenfalls möglich ist es, durch die geöffnete Ausnehmung hindurch Warmluft in Richtung auf den abzuschirmenden Gegenstand hin zuzuführen oder Kaltluft abzulassen, wenn dessen Temperaturerhöhung gewünscht wird. Außerdem kann die Ausnehmung in einer Betriebsphase erhöhter Temperatur zumindest teilweise verschlossen werden, während sie in einer Betriebsphase niedrigerer Temperatur zumindest teilweise freigegeben wird, so dass angestaute Wärme durch die Öffnung entweichen kann. Dabei sind grundsätzlich auch mehr als zwei Betriebsphasen unterschiedlicher Temperatur in Abhängigkeit von der Öffnungsgröße der Ausnehmung einstellbar.

Eine bevorzugte Anwendung des erfindungsgemäßen Hitzeschildes ist, wie bereits erwähnt, das Abschirmen von Komponenten im Bereich eines Verbrennungsmotors und insbesondere im Bereich der Abgasanlage. Bei diesen Anwendungen besteht hauptsächlich die Gefahr, dass sich der abzuschirmende Gegenstand in Folge der im Bereich des Hitzeschildes angestauten Wärme überhitzt. Um dies zu verhindern, ist der erfindungsgemäße Hitzeschild zweckmäßig so ausgebildet, dass der Verschluss sich beim Überschreiten einer bestimmten Grenztemperatur öffnet, so dass die angestaute Hitze aus dem Bereich zwischen Hitzeschild und abzuschirmendem Gegenstand entweichen kann. Solange die im Bereich des Hitzeschildes angeordneten Komponenten ihre Betriebstemperatur aber noch nicht erreicht haben, ist das Anstauen von Wärme im Bereich des Hitzeschildes durchaus sinnvoll, damit die Komponenten ihre optimale Betriebstemperatur möglichst schnell erreichen können. Aus diesem Grund ist der erfindungsgemäße Hitzeschild in dieser Variante bevorzugt so ausgelegt, dass der Verschluss bis zum Erreichen der Grenztemperatur geschlossen bleibt.

Eine weitere bevorzugte Anwendung liegt bei der Abschirmung von Partikelfiltern, insbesondere Dieselpartikelfiltern. Hier kann es, wie beschrieben, zweckmäßig sein, in einer bestimmten Betriebsphase die angesammelten Partikel bei erhöhter Temperatur oxidativ zu entfernen. Mit dem erfindungsgemäßen Hitzeschild kann die erforderliche Temperaturerhöhung besonders einfach und schnell erreicht werden. Im Unterschied zum Stand der Technik ist es häufig nicht mehr erforderlich, durch zusätzliche motorische Maßnahmen die Abgastemperatur zu erhöhen, auch wenn dies weiterhin möglich bleibt. Vielmehr kann durch ein Schließen des Verschlusses mittels der Betätigungsvorrichtung die Ausnehmung im Hitzeschild geschlossen werden. Daraufhin steigt die Temperatur im Bereich des Hitzeschilds und damit auch im Partikelfilter an. Reicht dieser Temperaturanstieg allein nicht zum Starten der oxidativen Reinigung aus, kann zusätzlich wie üblich das Kraftstoffgemisch motorisch angepasst, oder Brennstoff direkt eingespritzt werden. Nach abgeschlossener Reinigung wird der Verschluss wieder geöffnet, eventuell die zusätzliche geänderte Einspritzung beendet, und die Temperatur im Bereich des Hitzeschildes sinkt wieder, so dass der Partikelfilter im regulären Betriebszustand weiterarbeiten kann.

Im Falle des Hitzeschildes für einen Partikelfilter oder ähnliches ist der Verschluss zweckmäßig bei niedrigerer Temperatur geöffnet und schließt sich bei erhöhter Temperatur. Bei dem für einen Katalysator beschriebenen Hitzeschild ist es bevorzugt umgekehrt. Hier schließt sich der Verschluss mit sinkender Temperatur, während er bei Temperaturerhöhung öffnet. Beide Varianten sind im Rahmen der Erfindung entsprechend den Anforderungen realisierbar. Sie können auch in ein und demselben Hitzeschild gemeinsam genutzt werden.

Dabei ist es nicht unbedingt erforderlich, dass der Verschluss beispielsweise beim Überschreiten der vorgegebenen Grenztemperatur schlagartig öffnet und die Ausnehmung zu 100 % freigibt, während bei einer Temperatur von kleiner oder gleich der Grenztemperatur der Verschluss sofort vollständig schließt und die Ausnehmung ganz abdeckt. Es ist vielmehr ebenfalls möglich, dass das selbsttätige Öffnen und Schließen des Verschlusses innerhalb eines vorgegebenen Grenztemperaturintervalls stattfindet. Beispielsweise kann es sinnvoll sein, dass der Verschluss mit zunehmendem Überschreiten der Grenztemperatur die Ausnehmung zunehmend freigibt, so dass mit steigender Temperatur ein zunehmender Temperaturaustausch mit der Umgebung möglich wird. Umgekehrt kann sich der geöffnete Verschluss zunehmend wieder schließen, wenn sich die erhöhte Temperatur in Richtung auf die Grenztemperatur hin wieder absenkt. Auf diese Weise ist eine kontinuierliche, der Umgebungstemperatur angepasste Temperaturkontrolle möglich, die es erlaubt, den vom Hitzeschild abgeschirmten Gegenstand bei einer im Wesentlichen konstanten und für diesen Gegenstand optimalen Arbeitstemperatur zu halten. Das Verschließen der Durchgangsöffnung muss nicht zu einem hermetischen Abschluss der Öffnung führen. Ein gegenüber dem geöffneten Zustand deutlich reduzierter Temperaturaustausch ist im allgemeinen ausreichend. Das Vorstehende gilt für den Fall des Öffnens bei sinkender und des Schließens bei höherer Temperatur gleichermaßen.

In welchem Bereich die Grenztemperatur eingestellt wird, bei der der Verschluss im erfindungsgemäßen Hitzeschild öffnet oder schließt, hängt maßgeblich davon ab, bei welcher Temperatur der Gegenstand, welcher mit dem erfindungsgemäßen Hitzeschild abgeschirmt werden soll, gehalten werden soll. Im Falle von Katalysatoren ist dies zweckmäßig die Temperatur, bei welcher die beste Abgasreduktion möglich ist. Bei Partikelfiltern kann einerseits die optimale Temperatur für die Partikelfiltration und andererseits in der Partikelentfernungsphase die beste Temperatur zur oxidativen Entfernung der Partikel eingestellt werden. Diese jeweilige optimale Arbeitstemperatur kann mit dem erfindungsgemäßen Hitzeschild sehr rasch erreicht werden, da in der Aufwärmphase durch ein Verschließen der Ausnehmung mittels des Verschlusses Wärme im Bereich um den abzuschirmenden Gegenstand aufgestaut werden kann, so dass dieser sich rasch erwärmt. Andererseits kann ein zu starkes Überschreiten einer optimalen Arbeitstemperatur dadurch verhindert werden, dass die Grenztemperatur entsprechend eingestellt wird, bei deren Überschreitung der Verschluss im Hitzeschild selbsttätig öffnet und die Ausnehmung so je nach Temperatur ganz oder teilweise freigibt. Zwischen Hitzeschild und abzuschirmendem Gegenstand angestaute Hitze kann durch die freigegebene Ausnehmung entweichen. Zusätzlich oder alternativ ist es möglich, durch die geöffnete Ausnehmung Kühlluft in Richtung auf den abzuschirmenden Gegenstand (beispielsweise den Katalysator, Partikelfilter o. ä.) einzublasen, um diesen zu kühlen.

Die Ausnehmung kann entweder eine Durchgangsöffnung im Hitzschild sein oder auch eine Ausnehmung in einem Außenrandbereich des Hitzeschilds. Auch beide Varianten können in einem Hitzeschild miteinander kombiniert werden. Welche Möglichkeit gewählt wird, hängt unter anderem auch vom zur Verfügung stehenden Platz auf dem Hitzschild ab. Die Form der Ausnehmung ist grundsätzlich beliebig und ebenfalls hauptsächlich vom verfügbaren Raum abhängig. Die Größe der Ausnehmung wird in Abhängigkeit vom erforderlichen Wärmeaustausch gewählt. Der erforderliche Öffnungsquerschnitt kann mit einer einzigen oder mehreren Ausnehmungen realisiert werden.

Der selbsttätig öffnende und schließende Verschluss kann grundsätzlich jede beliebige Form aufweisen, die geeignet ist, die Ausnehmung im Hitzeschild im erforderlichen Maß zu verschließen. Sie kann in die Ausnehmung passend eingefügt werden oder die Ausnehmung abdeckend auf dem Hitzeschild angeordnet sein. Auch die Art und Weise, in der der Verschluss die Öffnung freigibt, ist grundsätzlich beliebig. Beispielsweise kann der Verschluss seitlich gegenüber der Öffnung verschoben und/oder verdreht werden und/oder beispielsweise nach Art einer Klappe von der Öffnung abgehoben werden. In den beiden erstgenannten Fällen wird der Verschluss bevorzugt mit einem Schieber überwiegend parallel zur Außenoberfläche des Hitzeschilds verschoben und/oder verdreht. In letzterem Fall kann der Verschluss grundsätzlich zu jeder Seite des Hitzeschildes hin öffnen. Aus Platzgründen ist es aber häufig zweckmäßig, dass der Verschluss sich zur Seite der Außenoberfläche des Hitzeschilds hin öffnet, da auf der Seite der Innenoberfläche zwischen Hitzeschild und abzuschirmendem Gegenstand häufig nicht hinreichend Platz vorhanden ist.

Der Verschluss im erfindungsgemäßen Hitzeschild ist so ausgebildet, dass er sich in Abhängigkeit von der Temperatur selbsttätig öffnet und schließt. Um für optimale Temperaturbedingungen für den abzuschirmenden Gegenstand zu sorgen, ist es bevorzugt, den Verschluss so auszubilden, dass dieser in Abhängigkeit von der Temperatur auf der Seite der Innenoberfläche des Hitzeschildes öffnet oder schließt. Dies wird zweckmäßig so realisiert, dass der Verschluss durch Einwirkung eines Materials relativ zur Ausnehmung bewegt wird, das sich unter dem Einfluss der Temperatur in seiner Form verändert. Dieses verformbare Material kann entweder Bestandteil des Verschlusses selbst sein oder ein separates Teil. Denkbar ist beispielsweise ein Stab, eine Stange oder ähnliches, der sich bei steigender Temperatur ausdehnt und den Verschluss von der Ausnehmung weg verschiebt. Zieht sich der Stab bei niedriger Temperatur wieder zusammen, schließt sich der Verschluss unter Einwirkung der Schwerkraft oder mittels eines Federelements oder dergleichen wieder. Alternativ kann die Temperatur von der Innenoberfläche des Hitzeschildes auch so innerhalb des Verschlusses weitergeleitet werden, dass ein von der Öffnung entfernter Teil des Verschlusses unter Einwirkung der Temperatur seine Form verändert und dadurch eine Öffnung des Verschlusses bewirkt.

Bevorzugt ist ein Verschluss, der zumindest teilweise aus einem Bimetallelement besteht. Ein Bimetallelement umfasst bekanntlich zwei übereinander liegende metallische Schichten, von denen eine ein größeres Wärmeausdehnungsvermögen besitzt als die andere. Mit steigender Temperatur dehnt sich deshalb das Metall mit dem höherem Wärmeausdehnungskoeffizienten stärker aus als diejenige Metallschicht mit dem niedrigeren Wärmeausdehnungskoeffizienten. Mit zunehmender Temperatur krümmt sich deshalb das Bimetallelement in Richtung auf die Seite der Metallschicht mit dem niedrigeren Wärmeausdehnungskoeffizienten hin. Ein Verschluss im erfindungsgemäßen Hitzeschild kann nun beispielsweise so ausgebildet sein, dass er, nach Art einer Klappe, aus einem Bimetallelement besteht, das in einem Temperaturbereich unterhalb der Grenztemperatur im Wesentlichen plan ist und die Ausnehmung verschließt. Bei Erreichen der Grenztemperatur dehnt sich die Schicht aus dem Metall mit einem höheren Wärmeausdehnungskoeffizienten zunehmend aus und verformt den Verschluss von der Ausnehmung und von einer der Oberflächen des Hitzeschildes weg und gibt so die Ausnehmung zunehmend frei. Umgekehrt zieht sich die Metallschicht mit höherem Wärmeausdehnungskoeffizienten mit sinkender Temperatur wieder zusammen, bis das Bimetallelement wieder plan ist und die Ausnehmung im Hitzeschild erneut verschlossen wird. Dieser Vorgang ist mit hoher Reproduzierbarkeit praktisch beliebig oft wiederholbar. Dabei kann gleichzeitig der Verschluss auf sehr einfache und kostengünstige Weise hergestellt und in den erfindungsgemäßen Hitzeschild ohne weiteres integriert werden. Zudem ist durch geeignete Materialwahl über einen breiten Bereich praktisch jede beliebige Grenztemperatur oder jedes beliebige Grenztemperaturintervall auf einfache Weise einstellbar.

Umgekehrt kann das Bimetallelement auch so angeordnet sein, dass es sich bei steigender Temperatur in Richtung auf den Hitzeschild hin verformt, so dass die Ausnehmung oberhalb einer Grenztemperatur verschlossen wird.

Der ein Bimetallelement umfassende klappenartige Verschluss muss nicht vollständig aus einem Bimetall gebildet sein. Es reicht vielmehr aus, wenn lediglich ein Teilbereich des Verschlusses von einem Bimetallelement gebildet wird. Dieses Bimetallelement wird dann zweckmäßig entweder in dem Bereich des klappenartigen Verschlusses angeordnet, der mit dem Hitzeschild verbunden ist, oder zumindest in der Nähe desjenigen Bereiches, an dem der klappenartige Verschluss am Hitzeschild befestigt ist. Das freie Ende des klappenartigen Verschlusses kann dagegen auch aus einem Material bestehen, das kein Bimetall ist, und lediglich an einem Abschnitt aus Bimetall gehaltert sein.

Zweckmäßig ist bei einem klappenartigen Verschluss, der bis zu einer Grenztemperatur die Ausnehmung verschlossen halten soll, das Bimetallelement so zum Hitzeschild angeordnet, dass die zur Innenoberfläche des Hitzeschildes weisende Seite aus dem Material mit höherem Wärmeausdehnungskoeffizienten besteht, die zur Außenoberfläche weisende Seite dagegen aus dem Material mit niedrigeren Wärmeausdehnungskoeffizienten. In diesem Fall öffnet sich der klappenartige Verschluss also auf die Seite der Außenoberfläche des Hitzeschildes hin.

In einer alternativen Ausführungsform ist der Verschluss so ausgebildet, dass der Hitzeschild eine verschiebbare Platte aufweist, die von einem zumindest teilweise aus Bimetall bestehenden Schieber geführt wird und im nicht-verformten Zustand des Bimetalls die Öffnung des Hitzeschildes abdeckt. Es ist dabei bevorzugt, wenn zumindest ein Teil des aus dem Bimetall gebildeten Schiebers Teil der Innenoberfläche des Hitzeschildes ist. Bei Anstieg der Temperatur an der Innenseite des Hitzeschildes über eine Grenztemperatur beginnt der Schieber sich zu verformen und verschiebt dabei die Platte derart, dass sie zumindest einen Teil der Ausnehmung freigibt. Auch bei dieser Ausführungsform schließt sich die Ausnehmung, wenn sich der Schieber beim Abkühlen zusammenzieht und die Platte unter Einwirkung der Schwerkraft oder mittels eines Federelements oder dergleichen wieder auf die Öffnung führt.

Eine Anordnung aus einer Platte mit einem zumindest zum Teil aus Bimetall bestehenden Schieber kann entweder auf einem Schub- oder auf einem Zugmechanismus aufgebaut sein. Beim Zugmechanismus ist das Bimetallelement so angeordnet, dass die zur Platte beziehungsweise Ausnehmung im Hitzeschild weisende Seite aus dem Material mit höherem Wärmeausdehnungskoeffizienten besteht, die von der Platte beziehungsweise der Ausnehmung im Hitzeschild wegweisende Seite dagegen aus dem Material mit niedrigeren Wärmeausdehnungskoeffizienten. Beim Schubmechanismus erfolgt die Anordnung umgekehrt.

Eine Variante dieser Ausführungsform sieht vor, dass der zumindest teilweise aus Bimetall gebildete Schieber nicht Teil der Innenoberfläche des Hitzeschildes ist, sondern die Wärmeübertragung über einen anderen Teil des Verschlusses erfolgt. Wiederum führt der Schieber die Platte so, dass sie bei Temperaturanstieg über die Grenztemperatur die Öffnung zumindest teilweise freigibt und bei Abfall der Temperatur unter die Grenztemperatur wieder schließt. Dabei wird bei größerem Abstand des Bimetalls vom Hitzeschild das Öffnen erst deutlich oberhalb der Grenztemperatur und das Schließen erst deutlich unterhalb der Grenztemperatur beginnen, da die Wärmeeinwirkung nicht unmittelbar erfolgt. Dieser Effekt lässt sich durch Einsatz eines besonders sensitiven Bimetalls abschwächen. Andererseits können durch diese Anordnung auch externe Temperatureinflüsse die Steuerung beeinflussen, so z.B. die im Motorraum herrschende Temperatur.

Alle beschriebenen Ausführungsformen mit einem Bimetall-Verschluss lassen sich auch so verwirklichen, dass der Verschluss bei Überschreiten einer Grenztemperatur schließt. Dies kann beispielsweise dadurch erreicht werden, dass das Bimetallelement im Temperaturbereich unterhalb der Grenztemperatur von der Ausnehmung weg gebogen ist und sich die auf der von der Ausnehmung abgewandten Seite orientierte Schicht mit höherem thermischen Ausdehnungskoeffizienten bei Erreichen der Grenztemperatur in Richtung auf die Ausnehmung hin ausdehnt. Das Bimetallelement streckt und ebnet sich also mit steigender Temperatur über der Ausnehmung ein.

Eine weitere Variante sieht vor, dass die Verschluss-Platte an einem Punkt drehbar mit dem darunter liegenden Hitzeschild verbunden ist, z.B. mittels einer flachen Schraubverbindung. Auch hier kann ein zumindest teilweise aus Bimetall bestehender Schieber ein Öffnen und Schließen in Abhängigkeit von der Temperatur bewirken. Dabei ist ein Ende des Schiebers prinzipiell verschiebbar an einer Seite der Platte geführt. Bei Krümmung des aus Bimetall bestehenden Teils des Schiebers wandert dieses Ende des Schiebers an der Seite der Verschluss-Platte entlang und bewirkt ein Öffnen bzw. Schließen der Ausnehmung durch eine Drehbewegung der Platte um den Befestigungspunkt zwischen Platte und Hitzeschild.

Eine besonders gute Regelung der Temperatur im Bereich zwischen Hitzeschild und abzuschirmendem Gegenstand ist dann möglich, wenn zusätzlich zu der ersten Ausnehmung mit dem ersten Verschluss wenigstens eine weitere Ausnehmung vorhanden ist, die ebenfalls mit einem in Abhängigkeit von der Temperatur selbsttätig öffnenden und schließenden Verschluss verschließbar ist. Der weitere Verschluss kann grundsätzlich wie oben beschrieben ausgebildet sein. Das Vorhandensein wenigstens eines weiteren Verschlusses und einer durch diesen verschließbaren Ausnehmung hat den Vorteil, dass die Temperatur im Bereich zwischen Hitzeschild und abzuschirmendem Gegenstand noch genauer eingestellt werden kann. Beispielsweise ist es möglich, die Verschlüsse so auszubilden, dass sie sich bei Überschreiten verschiedener Grenztemperaturen nacheinander öffnen. Dies kann beispielsweise durch Verwendung unterschiedlicher Bimetallelemente in/an den Verschlüssen erreicht werden. Das Öffnen der Verschlüsse nacheinander kann beispielsweise so erfolgen, dass mit zunehmender Temperatur der freigegebene Gesamt-Öffnungsquerschnitt der Ausnehmungen ansteigt, so dass durch die freigegebenen Ausnehmungen zunehmend mehr Heißluft entweichen kann. Dadurch kann ein Überhitzen selbst bei sehr stark ansteigenden Temperaturen verhindert werden.

Ein weiterer Vorteil, der durch das Vorsehen mehrerer mit einem Verschluss verschließbaren Ausnehmungen erreicht werden kann, besteht darin, dass im Raum zwischen Hitzeschild und abzuschirmendem Gegenstand eine gezielte Strömungsführung möglich wird. Beispielsweise kann bei geöffnetem Verschluss durch eine oder mehrere der freigegebenen Ausnehmungen kühlere Luft in Richtung auf den Gegenstand eingelassen werden, während erwärmte Luft durch die übrigen Ausnehmungen ausströmt. Die Ausrichtungen der Ausnehmungen und Verschlüsse auf dem Hitzeschild erfolgt dabei zweckmäßig so, dass die ausströmende Warmluft nicht auf in der Umgebung des Hitzeschildes angeordnete temperaturempfindliche Teile gerichtet ist. Idealerweise ist die warme Abluft so gerichtet, dass sie einer im Bereich um den Hitzeschild vorherrschenden Außenströmung zugeführt und von dieser fortgetragen wird. Vorteilhaft ist es ebenfalls, wenn die in den Bereich zwischen Hitzeschild und abzuschirmendem Gegenstand eingeführte kühlere Luft aus dieser im Bereich um den Hitzeschild vorherrschenden Außenströmung zugeführt wird.

Wie schon vorstehend beschrieben, ist es auch im Fall der Zufuhr kühlerer Luft in den Bereich zwischen Hitzeschild und abzuschirmendem Gegenstand möglich, dass sich verschiedene Verschlüsse für die Zufuhr kühlerer Luft bei unterschiedlichen Temperaturen öffnen. Gleiches gilt grundsätzlich auch für die Verschlüsse, durch die erwärmte Luft ausströmt. Auf diese Weise kann über einen großen Temperaturbereich eine sehr konstante Temperatur im Bereich zwischen Hitzeschild und abzuschirmendem Gegenstand sichergestellt werden. Zusätzlich oder alternativ zu diesen Maßnahmen ist es ebenfalls möglich, dass sich die Verschlüsse für die Zufuhr kühlerer Luft bei einer anderen Temperatur öffnen als die Verschlüsse für die Abfuhr erwärmter Luft. In letzterem Fall ist es bevorzugt, dass sich die Zufuhrverschlüsse bei etwas höherer Temperatur öffnen als die Verschlüsse für die Abfuhr von Warmluft.

Der erfindungsgemäße Hitzeschild ist nicht auf besondere Formen oder Größen beschränkt. Beispielsweise kann es sich um einen flächigen Hitzeschild handeln, der oberhalb des abzuschirmenden Gegenstandes angebracht ist, so dass sich Warmluft unterhalb des Hitzeschildes staut. Besonders geeignet ist die Erfindung für Hitzeschilde, welche den abzuschirmenden Gegenstand im Wesentlichen allseitig umschließen. Ein vergleichbarer Effekt kann auch erreicht werden, wenn ein nach einer Seite offener Hitzeschild von einem angrenzenden Bauteil verschlossen wird. Der abzuschirmende Gegenstand wird also von dem Hitzeschild und gegebenenfalls anderen Bauteilen weitgehend eingekapselt. Dies wird in der Regel keine hermetische Einschließung bedeuten, da üblicherweise im Hitzeschild nicht hermetisch abgeschlossene Durchlässe für Zu- und Ableitungen vorhanden sein werden. Dennoch ist in diesen Fällen der Wärmeaustausch mit der Umgebung relativ eingeschränkt, so dass es sehr rasch zu einer Überhitzung der im Hitzeschild eingekapselten Komponenten kommen kann. Andererseits ist die Kaltstartphase relativ kurz, da durch den Wärmerückhalt innerhalb des Hitzeschildes die gewünschte Betriebstemperatur rasch erreicht wird. Durch das erfindungsgemäße Vorsehen wenigstens einer Ausnehmung, die durch eine in Abhängigkeit von der Temperatur selbsttätig öffnende und schließende Klappe verschließbar ist, kann diese optimale Betriebstemperatur mit dem erfindungsgemäßen Hitzeschild auf einfache Weise in einem gewünschten Bereich konstant gehalten werden. Den abzuschirmenden Gegenstand im Wesentlichen vollständig umschließende Hitzeschilde sorgen zudem für eine besonders gute Schallisolierung.

Die erfindungsgemäß vorgeschlagene Maßnahme lässt sich auf einfache und kostengünstige Weise ohne zusätzliche komplizierte Maßnahmen oder Komponenten in herkömmlichen Hitzeschilden verwirklichen. Insofern können die Grundkörper der erfindungsgemäßen Hitzeschilde in ihrer Ausbildung grundsätzlich demjenigen entsprechen, was bereits aus dem Stand der Technik bekannt ist. Größe, Formgebung und Materialien entsprechen also dem Stand der Technik. Bevorzugt sind Hitzeschilde in Sandwich-Bauweise, die aus zwei üblicherweise aus metallischem Material bestehenden äußeren Schichten und einer dazwischen eingebetteten isolierenden Schicht bestehen. Die Oberflächen können dabei glatt, strukturiert oder perforiert sein. Derartige Hitzeschilde sind beispielsweise in der DE 3834054 A1 und der europäischen Patentanmeldung Nr. 05022095.3 der Anmelderin beschrieben. Weiterhin kann auf die GB 2270555 A und die US 2004/0142152 A1 verwiesen werden.

Die Erfindung kann grundsätzlich auf alle Hitzeschilde des Standes der Technik angewendet werden. Besonders geeignet ist die Erfindung für solche Hitzeschilde, die im Bereich hoher Temperaturentwicklung und zum Abschirmen solcher Gegenstände verwendet werden, die durch überhöhte Temperatur beschädigt werden könnten. Eine bevorzugte Verwendung der erfindungsgemäßen Hitzeschilde erfolgt daher im Bereich von Verbrennungsmotoren und hier insbesondere im Bereich der Abgasanlage. Beispiele bevorzugter Hitzeschilde sind solche für Katalysatoren, Vorkatalysatoren, Dieselpartikelfilter oder auch Turbolader. Die Erfindung kann zudem auch auf, insbesondere metallische, Unterböden im Bereich eines Abgasstranges angewendet werden.

Die Erfindung soll nachfolgend anhand von Zeichnungen näher erläutert werden. Diese Zeichnungen dienen ausschließlich der Illustration bevorzugter Ausführungsbeispiele der Erfindung, ohne dass die Erfindung auf diese beschränkt wäre. Gleiche Teile sind in den Zeichnungen mit gleichen Bezugszeichen versehen.

In den Figuren zeigen schematisch:
- Figur 1(a):: einen Querschnitt durch ein erstes Ausführungsbeispiel eines erfindungsgemäßen Hitzeschildes zum Abschirmen eines Katalysators mit geschlossenem Verschluss;
- Figur 1(b):: den Hitzeschild gemäß Figur 1(a) mit geöffnetem Verschluss;
- Figur 2(a):: einen Querschnitt durch ein zweites Ausführungsbeispiels eines erfindungsgemäßen Hitzeschildes zum Abschirmen eines Katalysators mit zwei geschlossenen Verschlüssen;
- Figur 2(b):: den Hitzeschild gemäß Figur 2(a) mit einem geöffneten und einem geschlossenen Verschluss;
- Figur 2(c):: den Hitzeschild gemäß Figur 2(a) mit zwei geöffneten Verschlüssen;
- Figur 3(a):: einen Querschnitt durch ein drittes Ausführungsbeispiel eines erfindungsgemäßen Hitzeschildes zum Abschirmen eines Katalysators mit einem geschlossenen Verschluss, wobei der Hitzeschild auf einer Seite offen ist;
- Figur 3(b):: den Hitzeschild gemäß Figur 3(a) mit geöffnetem Verschluss;
- Figur 4:: einen Teilquerschnitt durch einen erfindungsgemäßen Hitzeschild im Bereich eines Verschlusses;
- Figur 5:: einen Teilquerschnitt durch ein weiteres Ausführungsbeispiels eines erfindungsgemäßen Hitzeschildes im Bereich eines Verschlusses;

- Figur 6(a):: einen Querschnitt durch ein viertes Ausführungsbeispiel eines erfindungsgemäßen Hitzeschildes und einen damit abgeschirmten Katalysator mit geschlossenem Verschluss im Hitzeschild;
- Figur 6(b):: den Hitzeschild gemäß Figur 6(a) mit geöffnetem Verschluss;
- Figur 7(a):: einen Querschnitt durch ein fünftes Ausführungsbeispiel eines erfindungsgemäßen Hitzeschildes und einen damit abgeschirmten Katalysator mit geschlossenem Verschluss im Hitzeschild;
- Figur 7(b):: den Hitzeschild gemäß Figur 7(a) mit geöffnetem Verschluss;
- Fig. 8(a) bis 10(c):: Detailansichten verschiedener Ausführungsformen eines Schiebers des erfindungsgemäßen Hitzeschilds jeweils mit geschlossenem und geöffnetem Verschluss.

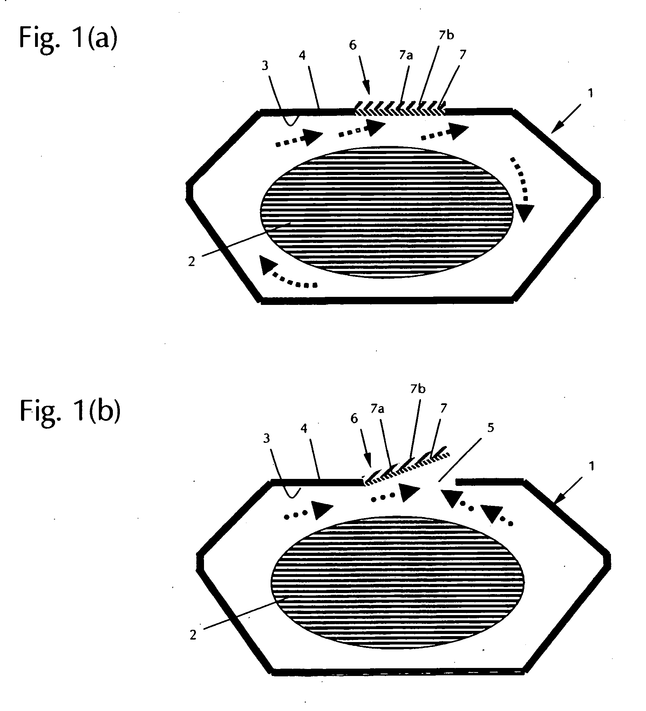

Figuren 1 (a) und 1 (b) zeigen ein erstes Ausführungsbeispiel eines erfindungsgemäßen Hitzeschildes 1, der zum Abschirmen eines im Inneren des Hitzeschildes 1 angeordneten Katalysators 2 dient. Bei dem Katalysator 2 kann es sich beispielsweise um einen Katalysator zur Reinigung von Abgasen eines Verbrennungsmotors eines Kraftfahrzeugs handeln. Die Abgasreinigungswirkung des Katalysators 2 ist innerhalb eines bestimmten Temperaturbereiches am besten. Dieser Temperaturbereich sollte möglichst schnell erreicht, aber nicht überschritten werden. Der Katalysator 2 ist im Wesentlichen vollständig und allseitig von dem erfindungsgemäßen Hitzeschild 1 eingeschlossen. Auf diese Weise sind der Katalysator 2 und seine Umgebung besonders gut voneinander gegen Temperatureinflüsse und Schall isoliert. Darüber hinaus dient die Einkapselung dazu, dass der Katalysator 2 rasch die für die optimale Abgasreinigung erforderliche Betriebstemperatur erreicht. Die Kaltstartphase kann also durch rasche Temperaturerhöhung im Inneren des Hitzeschildes 1 verkürzt werden, was im Hinblick auf die zu erwartende Abgasnorm Euro 5 von erheblichem Vorteil ist.

Figur 1(a) zeigt den Hitzeschild 1 mit dem in seinem Inneren angeordneten Katalysator während der Aufwärmphase auf die optimale Betriebstemperatur des Katalysators 2. In dieser Phase ist der Verschluss 6, der sich auf der Oberseite des Hitzeschildes befindet und eine dort vorhandene Ausnehmung in Form einer Durchgangsöffnung im Hitzeschild verschließt, vollständig geschlossen. Die während des Betriebs des Verbrennungsmotors erzeugte Wärme verbleibt deshalb im Inneren des Hitzeschildes 1 und heizt den Katalysator rasch auf die gewünschte Betriebstemperatur auf.

Der Verschluss 6 besteht im gezeigten Fall vollständig aus einem Bimetallelement 7, das einen zweischichtigen Aufbau aus einer der Innenoberfläche 3 des Hitzeschildes zugewandten Metallschicht 7a sowie einer der Außenoberfläche 4 zugewandten Metallschicht 7b besitzt. Die Metallschichten 7a und 7b sind aus Materialen mit unterschiedlichen Wärmeausdehnungskoeffizienten gebildet. Dabei ist der Wärmeausdehnungskoeffizient der Schicht 7a größer als derjenige der Metallschicht 7b. Die metallischen Materialien und der Schichtaufbau sind so gewählt, dass sich die Metallschicht 7a oberhalb einer bestimmten Grenztemperatur zu verformen und auszudehnen beginnt. Die Verformung der Metallschicht 7a führt dazu, dass sich diese in Richtung auf die Außenoberfläche 4 des Hitzeschildes 1 hin verbiegt. Dadurch hebt sich das freie Ende des Bimetallelements 7 (in den Figuren auf der rechten Seite) vom Hitzeschild 1 weg nach außen. Mit ansteigender Temperatur im Inneren des Hitzeschildes 1 und entsprechend zunehmender Verformung des Bimetallelementes 7 gibt der Verschluss 6 einen zunehmend größeren Öffnungsquerschnitt der Durchgangsöffnung 5 frei. Dies ist in Figur 1(b) dargestellt. Die Öffnung des Verschlusses 6 und die Freigabe der Durchgangsöffnung 5 bei Überschreiten der vorgegebenen Grenztemperatur sorgen dafür, dass im Inneren des Hitzeschildes 1 angestaute Wärme durch die Durchgangsöffnung entweichen kann, wie durch die Pfeile verdeutlicht. Dadurch wird die Überhitzung des Katalysators 2 im Inneren des Hitzeschildes 1 vermieden. Sinkt die Temperatur im Innenraum des Hitzeschildes 1 wieder, verformt sich das Bimetallelement 7 in Richtung auf die in Figur 1 (a) gezeigte Ausgangssituation hin zurück. Die Durchgangsöffnung 5 wird wieder vom Verschluss 6 verschlossen. Auf diese Weise wird ein zu starkes Absinken der Temperatur im Inneren des Hitzeschildes 1 verhindert. Ein erneuter Kaltstart des Motors würde wieder bei geschlossenem Verschluss 6 erfolgen, so dass der Katalysator 2 im Inneren des Hitzeschildes 1 erneut rasch auf die nötige Betriebstemperatur gebracht werden kann. Diese Vorgänge sind mit guter Reproduzierbarkeit beliebig oft wiederholbar, so dass für optimale Betriebsbedingungen des Katalysators bei gleichzeitig sehr gutem Schallschutz gesorgt werden kann.

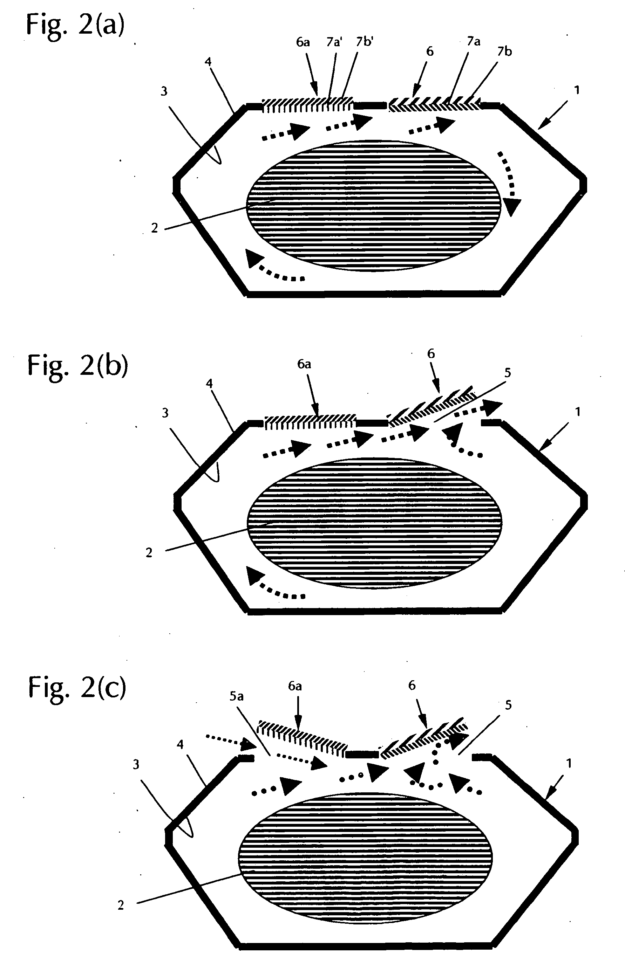

Figuren 2(a) bis 2(c) zeigen eine Weiterbildung des Hitzeschildes gemäß Figuren 1 (a) und 1 (b). Zusätzlich zum ersten Verschluss 6 ist im Hitzeschild 1 ein weiterer Verschluss 6a vorhanden, der eine weitere Durchgangsöffnung 5a im oberen Bereich des Hitzeschildes 1 verschließen kann. Das Funktionsprinzip beider Verschlüsse entspricht demjenigen des vorangegangenen Ausführungsbeispiels.

Figur 2(a) zeigt den Zustand des Hitzeschildes 1 in der Aufwärmphase. Beide Verschlüsse 6 und 6a sind verschlossen, so dass die Wärme im Inneren des Hitzeschildes 1 verbleibt und zum raschen Erreichen der Betriebstemperatur des Katalysators 2 beiträgt. Oberhalb einer ersten Grenztemperatur, die zu einer Überhitzung des Katalysators 2 führen könnte, öffnet sich der erste Verschluss 6 auf die vorstehend beschriebene Weise und gibt die Durchgangsöffnung 5 auf der rechten oberen Seite des Hitzeschildes 1 frei, so dass die durch die Pfeile angezeigte Warmluft aus dem Inneren des Hitzeschildes 1 entweichen kann. Der zweite Verschluss 6a ist in dieser Phase noch geschlossen. Er öffnet sich erst bei weiterer Temperaturerhöhung im Inneren des Hitzeschildes 1. Dies ist in Figur 2(c) dargestellt. Durch die Freigabe der Durchgangsöffnung 5a kann kühlere Luft durch diese Durchgangsöffnung ins Innere des Hitzeschildes 1 eintreten. Die kältere Luft strömt entlang der Oberseite des Katalysators 2, kühlt diesen und schleppt Warmluft durch die Durchgangsöffnung 5 auf der rechten oberen Seite des Hitzeschildes aus dessen Innerem heraus. Auf diese Weise ist auch bei sehr hoher Abgastemperatur eine effektive Kühlung des Katalysators möglich. Das beschriebene Ausführungsbeispiel ermöglicht also auch bei relativ stark schwankender Abgastemperatur, dass der Katalysator unter im Wesentlichen konstanten Temperaturbedingungen arbeiten kann.

Um das Öffnen der Verschlüsse 6 und 6a bei unterschiedlichen Grenztemperaturen zu erreichen, bestehen beide Verschlüsse aus unterschiedlich aufgebauten Bimetallelementen. Die Materialkombination der Schichten 7a und 7b unterscheidet sich also von der der Schichten 7a' und 7b'.

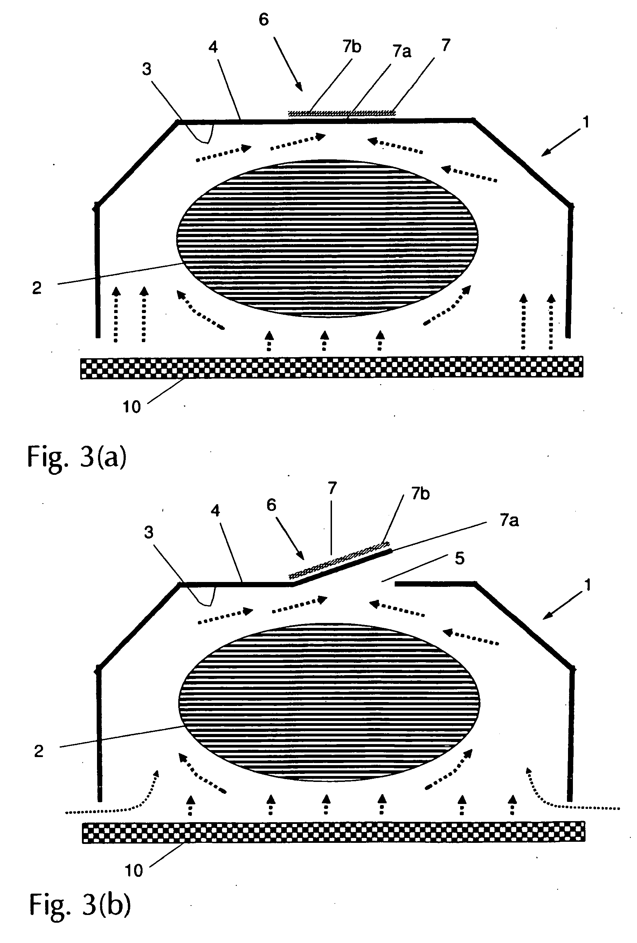

Figuren 3(a) und 3(b) zeigen einen alternativen Hitzeschild 1, der den Katalysator 2 nicht vollständig umgibt, sondern auf seiner Unterseite offen ist. Dabei weist die Unterkante nur einen geringen Abstand zum benachbarten Bauteil 10 auf, das im Betrieb des Motors Wärme abstrahlt. Wie im Ausführungsbeispiel nach Figuren 1(a) bis 1(c) weist der Hitzeschild nur einen Verschluss 6 auf. Der geringe Abstand zwischen Hitzeschild 1 und benachbartem Bauteil 10 beschleunigt das Erreichen der Betriebstemperatur des Katalysators 2 bei geschlossener Klappe 6. Bei Erreichen der Grenztemperatur wird der Verschluss 6 durch Verformung des Bimetallelements 7 geöffnet, wie in Figur 1(b) zu sehen ist. Die Warmluft aus dem Innenraum des Hitzeschilds kann durch die Öffnung 5 entweichen. Der dabei entstehende Sog bewirkt, dass durch den Abstand zwischen Hitzeschild 1 und benachbartem Bauteil 10 kühlere Luft nachströmt, so dass trotz der Wärmeabstrahlung des Bauteils 10 eine optimale Betriebstemperatur des Katalysators 2 gewährleistet ist. Der Abstand zwischen Hitzeschild 1 und benachbartem Bauteil 10 kann dabei - soweit dies vom vorhandenen Platz her möglich ist - auf diese Betriebstemperatur des Katalysators 2 und die Abstrahlung des Bauteils 10 abgestimmt werden.

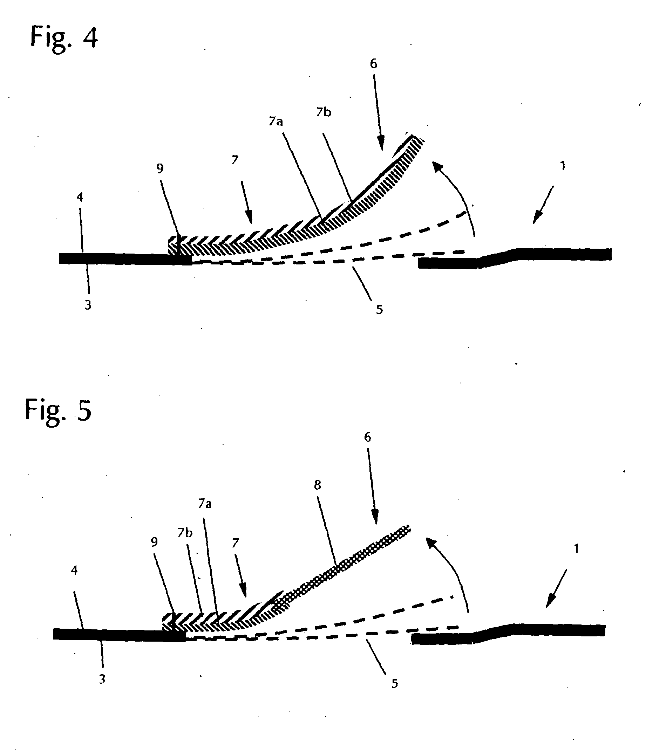

Figuren 4 und 5 zeigen zwei mögliche Ausbildungsformen eines sich in Abhängigkeit von der Temperatur selbsttätig öffnenden und schließenden Verschlusses. In Figur 4 besteht der Verschluss 6 vollständig aus einem Bimetallelement 7, während der Verschluss 6 in Figur 5 nur teilweise von einem Bimetallelement 7 gebildet wird und der restliche Teil 8 des Verschlusses 6 aus einem Material besteht, welches kein Bimetall ist.

Die in den vorangegangenen Figuren dargestellten Verschlüsse 6 entsprechen im Wesentlichen dem in Figur 4 im Detail dargestellten Verschluss. Dieser besteht vollständig aus einem Bimetallelement 7 mit einer der Oberfläche 4 des Hitzeschildes 1 zugewandten Schicht 7a und einer auf dieser angeordneten Schicht 7b. Die Schicht 7a besteht aus einem Metall mit einem höheren Wärmeausdehnungskoeffizienten als dem Wärmeausdehnungskoeffizienten der Metallschicht 7b. Überschreitet die Temperatur auf der Seite der Innenoberfläche 3 des Hitzeschildes 1 (also zum Innenraum des Hitzeschildes 1 hin) eine vorgegebene Grenztemperatur, dehnt sich das Metall der Schicht 7a stärker aus als das Metall der Schicht 7b, wodurch sich die Schicht 7a in Richtung von der Oberfläche 4 des Hitzeschildes 1 weg nach außen aufwölbt.

Das den Verschluss 6 bildende Bimetallelement 7 ist an seinem einen Ende (hier dem linken) am Hitzeschild befestigt. Die Befestigungsstelle ist mit 9 bezeichnet und kann beispielsweise aus einem Schweißpunkt, einer Schweißnaht oder einer Niete bestehen. Es sind auch beliebige andere geeignete Befestigungsmöglichkeiten denkbar. Unter dem Einfluss der erhöhten Temperatur im Inneren des Hitzeschildes 1 wölbt sich also das Bimetallelement 7 nach außen auf, so dass das der Befestigungsstelle 9 gegenüber liegende freie Ende des Verschlusses 6 von der Oberfläche 4 des Hitzeschildes 1 abgehoben wird. Je höher die Temperatur im Inneren des Hitzeschildes 1, desto stärker ist die Aufbiegung des Verschlusses 6. Dies ist durch die gestrichelten Linien und den Pfeil angedeutet, der die Richtung der Aufwölbung anzeigt. Die unterste gestrichelte Linie verdeutlicht die Position des Verschlusses im geschlossenen Zustand, also bei einer Temperatur unterhalb der Grenztemperatur. Die zweite gestrichelte Linie oberhalb der Schließposition gibt eine Position an, bei welcher die Temperatur etwas oberhalb der Grenztemperatur liegt, bei welcher die Verformung des Bimetallelementes 7 beginnt. Die dargestellte Position des Verschlusses 6 entspricht der unter den herrschenden Temperaturbedingungen zu erwartenden maximalen Öffnungsposition des Verschlusses.

Figur 5 zeigt eine alternative Ausführungsform des Verschlusses 6. Hier bildet das Bimetallelement 7 nur einen Teil des Verschlusses 6, nämlich denjenigen Bereich, mit welchem der Verschluss am Hitzeschild 1 befestigt ist. Das freie Ende des Verschlusses 6 dagegen besteht aus einem Abschnitt 8, der nicht aus bimetallischem Material besteht. Das in der Figur 5 linke Ende des Abschnitts 8 ist zwischen den Schichten 7a und 7b des Bimetallelements 7 befestigt. Das selbsttätige Öffnen und Schließen des Verschlusses 6 erfolgt grundsätzlich auf die selbe Weise, wie sie für Figur 3 beschrieben wurde. Auch hier besteht die Schicht 7a aus einem Metall mit einem größeren Wärmeausdehnungskoeffizienten als demjenigen der Schicht 7b. Bei einer Temperatur oberhalb einer vorgegebenen Grenztemperatur im Inneren des Hitzeschildes 1 wölbt sich daher das Bimetallelement vom Hitzeschild 1 weg nach außen auf, so dass mit steigender Temperatur die Durchgangsöffnung 5 vom Verschluss 6 zunehmend freigegeben wird. Umgekehrt verschließt der Verschluss 6 die Durchgangsöffnung 5 zunehmend, wenn die Temperatur im Inneren des Hitzeschildes 1 wieder absinkt.

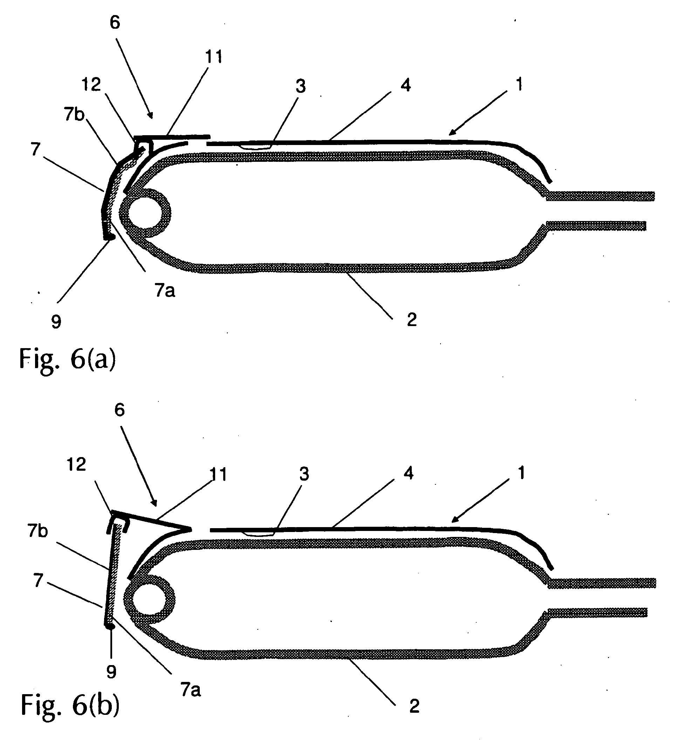

In Figur 6(a) sind im Querschnitt ein viertes Ausführungsbeispiel eines erfindungsgemäßen Hitzeschildes 1 und ein damit abgeschirmter Katalysator 2 gezeigt. Der Verschluss 6 ist dabei aus einer Platte 11 und einem Bimetallelement 7 gebildet, wobei das Bimetallelement mittels Nieten, Schweißen, Schauben an einem Punkt 10 in der Nähe des Hitzeschildes befestigt ist. Das Bimetallelement 7 ist dabei zumindest abschnittsweise in einer Schiene 12 an der Platte 11 geführt. Sein der Schiene 12 zugewandtes Ende kann dabei beispielsweise in die Schiene 12 eingehakt sein. Das Bimetallelement 7 überlappt mit dem Hitzeschild 1 und setzt diesen seitlich fort. Dadurch ist der überstehende Teil des Bimetallelements 7 auf seiner Innenoberfläche den selben Bedingungen ausgesetzt wie die Innenoberfläche 3 des Hitzeschilds 1. Anders als in den bisher gezeigten Ausführungsbeispielen ist das Bimetallelement im abgekühlten Zustand gekrümmt. Nach Starten des Motors dehnt sich durch die Erwärmung die Schicht 7a des Bimetallelements 7 aus einem Metall mit einem größeren Wärmeausdehnungskoeffizienten, die dem Katalysator zugewandt ist, stärker als Schicht 7b, die den geringeren Wärmeausdehnungskoeffizienten aufweist. Wie in Figur 6(b) gezeigt ist, wird das Bimetallelement beim Erwärmen über die Grenztemperatur gerade gebogen und gibt dabei die Öffnung 5 über einen Zugmechanismus frei. Auch dieser Verschluss erlaubt ein reproduzierbares Schließen bei Abkühlen der Innenoberfläche 3 des Hitzeschildes 1 bzw. des Bimetallelementes 7.

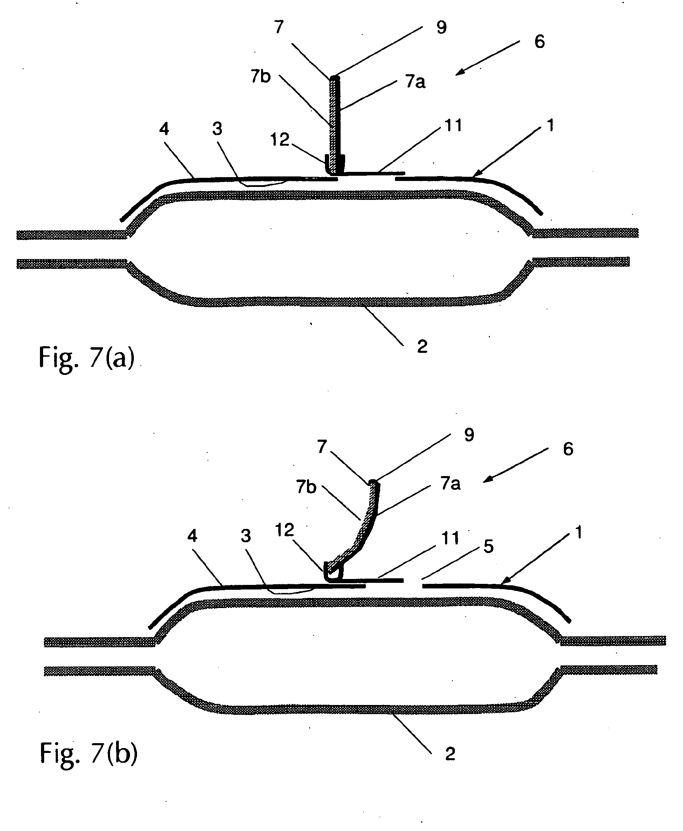

Figur 7(a) zeigt eine weitere Ausführungsform eines erfindungsgemäßen Hitzeschildes 1 und einen Katalysator 2 im Querschnitt. Hier ist das Bimetallelement 7 selbst nicht Teil der Innenoberfläche des Hitzeschildes, vielmehr erfolgt die Wärmeübertragung auf das Bimetallelement 7 über die Platte 11. Auch bei dieser Ausführungsform führt das Bimetallelement 7 die Platte so, dass sie bei Temperaturanstieg über die Grenztemperatur die Öffnung 5 zumindest teilweise freigibt, wie in Figur 7 (b) zu sehen ist. Bei Abfall der Temperatur unter die Grenztemperatur schließt der Verschluss 6 wieder, dabei wird die Platte 11 auf die Öffnung 5 gezogen. Anders als im zuvor gezeigten Ausführungsbeispiel aus Figur 6(a) und 6(b) erfolgt das Öffnen mittels eines Schubmechanismus. Entsprechend ist der Teil 7a des Bimetallelements 7 mit größerer Wärmeausdehnung auf der Seite der Öffnung 5 bzw. der Platte 11 angebracht.

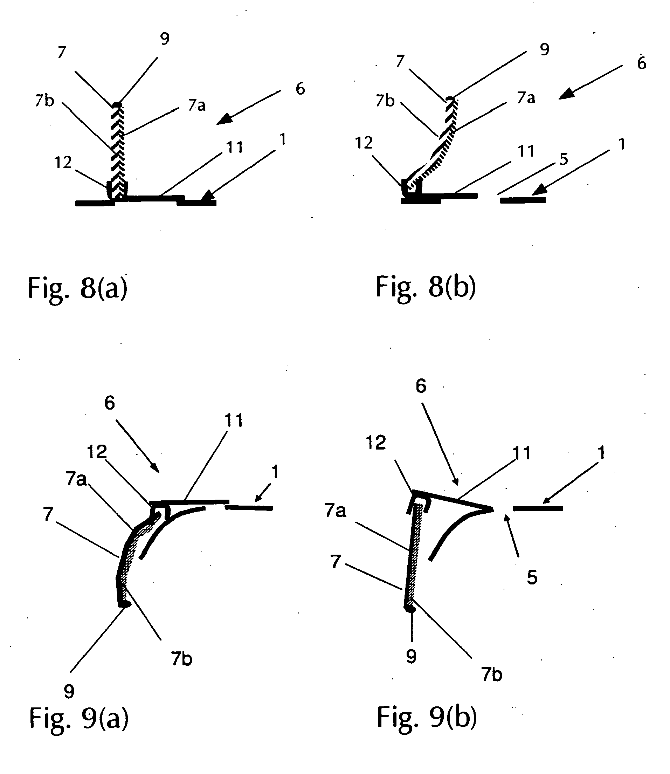

Die Figuren 8(a) bis 10(c) stellen Detailansichten möglicher Ausführungsformen eines Schiebers des erfindungsgemäßen Hitzeschilds jeweils mit geschlossenem und geöffnetem Verschluss dar. Dabei entsprechen Figuren 8(a) und 8(b) dem in Figuren 7(a) und 7(b) dargestellten Schubmechanismus. Figuren 9(a) und 9(b) geben den Zugmechanismus aus Figuren 6(a) und 6(b) wieder.

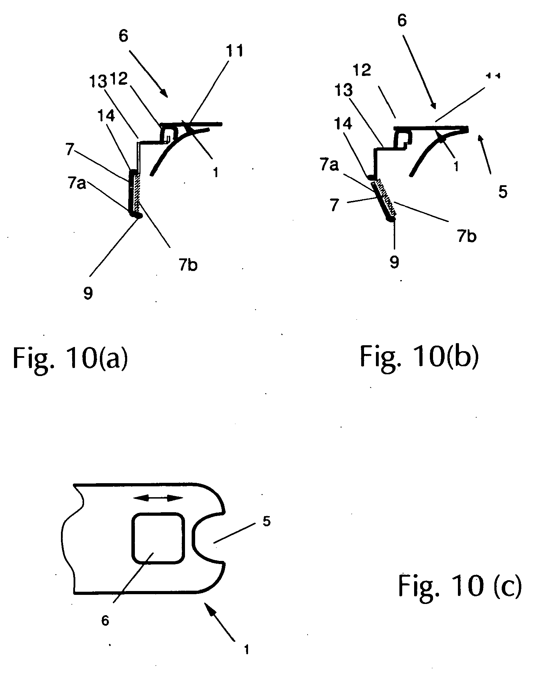

Figur 10(a) bis 10(c) zeigen eine Ausführungsform, bei der die Ausnehmung 5 im Hitzeschild 1 eine Aussparung im Außenrandbereich des Hitzeschilds ist. Fig. 10(c) verdeutlich dies stark schematisiert in einer Draufsicht auf eine Oberseite des Hitzeschildes 1. Die Ausnehmung ist mit einem Schieber 11 als Verschluss 6 verschließbar. Der Verschluss 6 kann in Pfeilrichtung mittels eines Schließmechanismus verschoben werden, der eine Variante des Zugmechanismus gemäß Fig. 9(a) und 9(b) ist. Dabei wird nur ein Teil des Aktors von dem Bimetallelement 7 gebildet, das über einen gewinkelten Stab 13 an der Führung 12 der Platte 11 befestigt ist. Der Stab 13 ist mittels Nieten, Schweißen, Verschrauben o. ä. am Ende 14 mit dem Bimetallelement 7 verbunden. Der Aktor wird also gebildet von Bimetallelement 7 einschließlich seiner Befestigung 9, Stab 13 und Führung 12. Neben der hier gezeigten gewinkelten Ausführungsform des Stabes 13 sind auch gekrümmte, sichelförmige und andere Varianten prinzipiell einsetzbar.

## Patentansprüche

1. Hitzeschild (1) zum Abschirmen eines Gegenstandes (2) gegen Hitze und/oder Schall mit einer dem Gegenstand (2) zugewandten Innenoberfläche (3) und einer vom Gegenstand (2) abgewandten Außenoberfläche (4) sowie einer Ausnehmung (5), die durch den Hitzeschild (1) mit Innenoberfläche (3) und Außenoberfläche (4) hindurch geht,
**dadurch gekennzeichnet,**
**dass** er einen Verschluss (6) zum wenigstens teilweisen Verschließen der Ausnehmung (5) aufweist, der sich in Abhängigkeit von der Temperatur selbsttätig öffnet und schließt.

2. Hitzeschild gemäß Anspruch 1,
**dadurch gekennzeichnet,**
**dass** der Verschluss (6) ausgebildet ist, in Abhängigkeit von der Temperatur auf der Seite der Innenoberfläche (3) zu öffnen oder schließen.

3. Hitzeschild gemäß Anspruch 1 oder 2,
**dadurch gekennzeichnet,**
**dass** der Verschluss (6) ausgebildet ist, beim Überschreiten einer bestimmten Grenztemperatur zu öffnen und bei einer Temperatur von kleiner oder gleich der Grenztemperatur zu schließen.

4. Hitzeschild gemäß Anspruch 3,
**dadurch gekennzeichnet,**
**dass** der Verschluss (6) ausgebildet ist, die Ausnehmung (5) mit zunehmendem Abstand von der Grenztemperatur zunehmend frei zu geben.

5. Hitzeschild nach einem der vorhergehenden Ansprüche,
**dadurch gekennzeichnet,**
**dass** der Verschluss (6) ausgebildet ist, zur Seite der Außenoberfläche (4) hin zu öffnen.

6. Hitzeschild gemäß Anspruch 1 oder 2,
**dadurch gekennzeichnet,**
**dass** der Verschluss (6) ausgebildet ist, beim Überschreiten einer bestimmten Grenztemperatur zu schließen und bei einer Temperatur von kleiner oder gleich der Grenztemperatur zu öffnen.

7. Hitzeschild gemäß Anspruch 6,
**dadurch gekennzeichnet,**
**dass** der Verschluss (6) ausgebildet ist, die Ausnehmung (5) mit zunehmendem Abstand von der Grenztemperatur zunehmend zu schließen.

8. Hitzeschild nach einem der vorhergehenden Ansprüche,
**dadurch gekennzeichnet,**
**dass** der Verschluss (6) zumindest teilweise aus einem Bimetallelement (7) besteht.

9. Hitzeschild nach Anspruch 8,
**dadurch gekennzeichnet,**
**dass** der Verschluss (6) an seinem freien Ende aus einem nicht aus Bimetall bestehenden Abschnitt (8) gebildet ist, der von dem Bimetallelement (7) gehaltert wird.

10. Hitzeschild nach einem der vorhergehenden Ansprüche,
**dadurch gekennzeichnet,**
**dass** wenigstens ein weiterer in Abhängigkeit von der Temperatur selbsttätig öffnender und schließender Verschluss (6a) zum wenigstens teilweisen Verschließen einer weiteren Ausnehmung (5a) vorhanden ist.

11. Hitzeschild nach Anspruch 10,
**dadurch gekennzeichnet,**
**dass** der weitere Verschluss (6a) ausgebildet ist, bei Überschreiten einer anderen, insbesondere einer höheren, Grenztemperatur zu öffnen als der erste Verschluss (6).

12. Hitzeschild nach einem der vorhergehenden Ansprüche,
**dadurch gekennzeichnet,**
**dass** der Verschluss (6, 6a) in Form einer Klappe ausgebildet ist.

13. Hitzeschild nach einem der Ansprüche 3 bis 5 und 8 bis 12,
**dadurch gekennzeichnet,**
**dass** die zur Innenoberfläche (3) weisende Seite (7a) des Bimetallelements (7) aus einem Material mit höherem Wärmeausdehnungskoeffizienten besteht und die zur Außenoberfläche (4) weisende Seite (7b) aus einem Material mit niedrigerem Wärmeausdehnungskoeffizienten.

14. Hitzeschild nach einem der Ansprüche 1 bis 12,
**dadurch gekennzeichnet,**
**dass** der Verschluss (6, 6a) einen Schieber (11) enthält.

15. Hitzeschild nach Anspruch 14,
**dadurch gekennzeichnet,**
**dass** der Verschluss (6) mittels eines Zugmechanismus geöffnet wird.

16. Hitzeschild nach Anspruch 12,
**dadurch gekennzeichnet,**
**dass** der Verschluss (6) mittels eines Schubmechanismus geöffnet wird.

17. Hitzeschild nach einem der vorhergehenden Ansprüche,
**dadurch gekennzeichnet,**
**dass** er den abzuschirmenden Gegenstand (2) im Wesentlichen allseitig umschließt.

18. Hitzeschild nach einem der vorhergehenden Ansprüche zum Abschirmen eines Gegenstandes (2) im Bereich eines Verbrennungsmotors, insbesondere Hitzeschild für einen Katalysator, einen Dieselpartikelfilter, einen Turbolader oder einen Abgasstrang.

## Claims

1. A heat shield (1) for shielding an object (2) from heat and/or noise having an internal surface (3) facing toward the object (2) and an external surface (4) facing away from the object (2), as well as an opening (5), which goes through the heat shield (1) having internal surface (3) and external surface (4),
**characterized in that** it has a closure (6) for at least partially closing the opening (5), which opens and closes automatically as a function of the temperature.

2. The heat shield according to Claim 1,
**characterized in that** the closure (6) is implemented to open or close as a function of the temperature on the side of the internal surface (3).

3. The heat shield according to Claim 1 or 2,
**characterized in that** the closure (6) is implemented to open upon exceeding a specific limiting temperature and to close at a temperature less than or equal to the limiting temperature.

4. The heat shield according to Claim 3,
**characterized in that** the closure (6) is implemented to expose the opening (5) increasingly with increasing distance from the limiting temperature.

5. The heat shield according to one of the preceding claims,
**characterized in that** the closure (6) is implemented to open toward the side of the external surface (4).

6. The heat shield according to Claim 1 or 2,
**characterized in that** the closure (6) is implemented to close upon exceeding a specific limiting temperature and to open at a temperature less than or equal to the limiting temperature.

7. The heat shield according to Claim 6,
**characterized in that** the closure (6) is implemented to close the opening (5) increasingly with increasing distance from the limiting temperature.

8. The heat shield according to one of the preceding claims,
**characterized in that** the closure (6) at least partially comprises a bimetallic element (7).

9. The heat shield according to Claim 8,
**characterized in that** the closure (6) is formed on its free end by a section (8) not comprising bimetal, which is retained by the bimetallic element (7).

10. The heat shield according to one of the preceding claims,
**characterized in that** at least one further closure (6a), which opens and closes automatically as a function of the temperature, is provided for at least partially closing a further opening (5a).

11. The heat shield according to Claim 10,
**characterized in that** the further closure (6a) is implemented to open upon exceeding another, particularly a higher limiting temperature than the first closure (6).

12. The heat shield according to one of the preceding claims,
**characterized in that** the closure (6, 6a) is implemented in the form of a flap.

13. The heat shield according to one of Claims 3 through 5 and 8 through 12,
**characterized in that** the side (7a) of the bimetallic element (7) facing toward the internal surface (3) comprises a material having a higher thermal expansion coefficient and the side (7b) facing toward the external surface (4) comprises a material having a lower thermal expansion coefficient.

14. The heat shield according to one of Claims 1 through 12,
**characterized in that** the closure (6, 6a) contains a slide (11).

15. The heat shield according to Claim 14,
**characterized in that** the closure (6) is opened using a pull mechanism.

16. The heat shield according to Claim 12,
**characterized in that** the closure (6) is opened using a thrust mechanism.

17. The heat shield according to one of the preceding claims,
**characterized in that** it encloses the object (2) to be shielded essentially on all sides.

18. The heat shield according to one of the preceding claims for shielding an object (2) in the area of an internal combustion engine, in particular a heat shield for a catalytic converter, a diesel particulate filter, turbocharger, or an exhaust system.

## Revendications

1. Bouclier thermique (1) destiné à isoler un objet (2) de la chaleur et/ou du bruit avec une surface intérieure (3) tournée vers l'objet (2) et une surface extérieure (4) tournée à l'opposé de l'objet (2) ainsi qu'un évidement (5) qui traverse le bouclier thermique (1) avec la surface intérieure (3) et la surface extérieure (4),
**caractérisé en ce qu'**il comporte un couvercle (6) destiné à fermer au moins partiellement l'évidement (5), qui s'ouvre et se ferme de lui-même en fonction de la température.

2. Bouclier thermique selon la revendication 1, **caractérisé en ce que** le couvercle (6) est conçu pour s'ouvrir ou se fermer en fonction de la température du côté de la surface intérieure (3).

3. Bouclier thermique selon la revendication 1 ou 2, **caractérisé en ce que** le couvercle (6) est conçu pour s'ouvrir quand une certaine température limite est dépassée et se fermer quand la température est inférieure ou égale à la température limite.

4. Bouclier thermique selon la revendication 3, **caractérisé en ce que** le couvercle (6) est conçu pour dégager de plus en plus l'évidement (5) quand l'écart par rapport à la température limite augmente.

5. Bouclier thermique selon l'une des revendications précédentes, **caractérisé en ce que** le couvercle (6) est conçu pour s'ouvrir vers le côté de la surface extérieure (4).

6. Bouclier thermique selon la revendication 1 ou 2, **caractérisé en ce que** le couvercle (6) est conçu pour se fermer quand une certaine température limite est dépassée et s'ouvrir quand la température est inférieure ou égale à la température limite.

7. Bouclier thermique selon la revendication 6, **caractérisé en ce que** le couvercle (6) est conformé pour fermer de plus en plus l'évidement (5) quand l'écart par rapport à la température limite augmente.

8. Bouclier thermique selon l'une des revendications précédentes, **caractérisé en ce que** le couvercle (6) se compose au moins partiellement d'un élément bimétallique (7).

9. Bouclier thermique selon la revendication 8, **caractérisé en ce que** le couvercle (6) est formé à son extrémité libre d'une partie non composée d'un bimétal (8), qui est retenue par l'élément bimétallique (7).

10. Bouclier thermique selon l'une des revendications précédentes, **caractérisé en ce qu'**au moins un autre couvercle (6a) s'ouvrant et se fermant de lui-même en fonction de la température est prévu pour fermer au moins partiellement un autre évidement (5a).

11. Bouclier thermique selon la revendication 10, **caractérisé en ce que** l'autre couvercle (6a) est conçu pour s'ouvrir lorsqu'une température limite différente de celle du premier couvercle (6), en particulier une température plus élevée, est dépassée.

12. Bouclier thermique selon l'une des revendications précédentes, **caractérisé en ce que** le couvercle (6, 6a) est conformé comme un clapet.

13. Bouclier thermique selon l'une des revendications 3 à 5 et 8 à 12, **caractérisé en ce que** le côté (7a) de l'élément bimétallique (7) orienté vers la surface intérieure (3) se compose d'un matériau ayant un plus fort coefficient de dilatation thermique et le côté (7b) orienté vers la surface extérieure (4) d'un matériau ayant un plus faible coefficient de dilatation thermique.

14. Bouclier thermique selon l'une des revendications 1 à 12, **caractérisé en ce que** le couvercle (6, 6a) contient un tiroir (11).

15. Bouclier thermique selon la revendication 14, **caractérisé en ce que** le couvercle (6) est ouvert au moyen d'un mécanisme de traction.

16. Bouclier thermique selon la revendication 12, **caractérisé en ce que** le couvercle (6) est ouvert au moyen d'un mécanisme de poussée.

17. Bouclier thermique selon l'une des revendications précédentes, **caractérisé en ce qu'**il entoure sensiblement sur tous les côtés l'objet (2) à isoler.

18. Bouclier thermique selon l'une des revendications précédentes destiné à isoler un objet (2) dans le domaine d'un moteur à combustion interne, en particulier bouclier thermique pour un catalyseur, un filtre à particules pour diesel, un turbocompresseur ou un tuyau d'échappement.
